# EUROPÄISCHE PATENTSCHRIFT

(11) **EP 4 709 625 B1**
(45) Veröffentlichungstag und Bekanntmachung des Hinweises auf die Patenterteilung: **02.12.2026**
(21) Anmeldenummer: 25729271.4
(22) Anmeldetag: 26.05.2025
(51) Int. Cl.: B60W 30/095

(54) **VERFAHREN ZUM BETREIBEN EINES FAHRASSISTENZSYSTEMS EINES FAHRZEUGS ZUR REDUZIERUNG ODER DEAKTIVIERUNG VON FAHRASSISTENZFUNKTIONEN**
METHOD FOR OPERATING A DRIVING ASSISTANCE SYSTEM OF A VEHICLE FOR REDUCING OR DEACTIVATING DRIVING ASSISTANCE FUNCTIONS
PROCÉDÉ DE FONCTIONNEMENT D'UN SYSTÈME D'AIDE À LA CONDUITE D'UN VÉHICULE POUR RÉDUIRE OU DÉSACTIVER DES FONCTIONS D'AIDE À LA CONDUITE

(30) Priorität: 18.07.2024 DE 102024206747
(43) Veröffentlichungstag der Anmeldung: 18.03.2026
(73) Patentinhaber: Volkswagen Aktiengesellschaft, 38440 Wolfsburg (DE)
(72) Erfinder: MÜNNING, Daniel, 38124 Braunschweig (DE); VÖLK, Alexander, 38102 Braunschweig (DE)
(86) Internationale Anmeldenummer: PCT/EP2025/064475
(87) Internationale Veröffentlichungsnummer: WO 2026/017307

(56) Entgegenhaltungen:
- EP-A2- 2 883 769
- DE-A1- 102012 218 361
- DE-A1- 102014 202 385
- DE-A1- 102020 209 007
- US-A1- 2014 195 120

## Beschreibung

Die Erfindung betrifft ein Verfahren zum Betreiben eines Fahrassistenzsystems eines Fahrzeugs, ein Fahrassistenzsystem ausgebildet zur Verwendung in einem solchen Verfahren sowie ein Fahrzeug, aufweisend ein solches Fahrassistenzsystem.

Aus der US 2023/ 054 608 A1 ist bekannt, dass ein Fahrassistenzsystem eines Fahrzeugs feststellen kann, dass Kollisionen mit Objekten unmittelbar bevorstehen, und eine Bremsung einleiten kann, um die Fahrzeuge zu verlangsamen oder anzuhalten und so zu versuchen, die Kollisionen zu vermeiden. Die herkömmliche Aktivierung des Fahrassistenzsystems basiert in der Regel auf Schätzungen der Zeit bis zur Kollision von Zielen. Im Falle eines orthogonal kreuzenden Ziels kann die konventionelle Fahrassistenzsystem-Aktivierung beispielsweise auf der Lösung einer quadratischen Gleichung beruhen, die auf der Dynamik des Fahrzeugs basiert, ohne zusätzliche Logik oder Kontexterkennung. Dies führt jedoch häufig zu einer Aktivierung in Situationen mit geringem Risiko. Zum Beispiel wenn aufgrund einer falsch-positiven Kollisionserkennung eine herkömmliche Fahrassistenzsystem-Funktion feststellt, dass eine Kollision unmittelbar bevorsteht, ein menschlicher Fahrer oder eine objektive Analyse dies jedoch nicht tun würde.

In der WO 2023/ 235 251 A1 werden Systeme und Verfahren zur Erkennung einer Fahrzeugkollision beschrieben. Eine Rechenvorrichtung kann ein Fahrzeugereignis auf der Grundlage von Trägheitssensordaten und Geschwindigkeit von mindestens einem Sensor in einem Gehäuse innerhalb einer Fahrzeugkabine bestimmen und das Fahrzeugereignis auf der Grundlage der Trägheitssensordaten, der Geschwindigkeit und der Fahrzeugklassendaten des Fahrzeugs als Kollisionsereignis oder Nicht-Kollisionsereignis klassifizieren. Die Rechenvorrichtung kann eine Ereignisunterklasse des Kollisionsereignisses oder des Nicht-Kollisionsereignisses auf der Grundlage der Trägheitssensordaten, der Geschwindigkeit und der Fahrzeugklassendaten des Fahrzeugs klassifizieren. Die Rechenvorrichtung kann eine Benachrichtigung basierend auf der Ereignisunterklasse erzeugen.

Die US 2024/ 062 655 A1 beschreibt Systeme und Verfahren zur Verarbeitung von Meldungen, die von Fahrzeugen empfangen werden. Eine Verarbeitungsvorrichtung führt Operationen durch, die Folgendes umfassen: Empfangen eines ersten, von einem ersten Fahrzeug erzeugten Berichts, wobei der erste Bericht von dem ersten Fahrzeug für eine erste, von dem ersten Fahrzeug erfasste Gefahr erzeugt wird; Empfangen eines zweiten, von einem zweiten Fahrzeug erzeugten Berichts, wobei der zweite Bericht von dem zweiten Fahrzeug für eine zweite, von dem zweiten Fahrzeug erfasste Gefahr erzeugt wird; Analysieren des ersten Berichts und des zweiten Berichts, um zu bestimmen, dass der erste Bericht und der zweite Bericht eine zusammenhängende Gefahr identifizieren; Zusammenfassen des ersten Berichts und des zweiten Berichts zu einem konsolidierten Bericht auf der Grundlage der Bestimmung, dass der erste Bericht und der zweite Bericht eine zusammenhängende Gefahr identifizieren; und Erzeugen einer Karte, wobei die Karte einen Ort der zusammenhängenden Gefahr auf der Grundlage des konsolidierten Berichts anzeigt.

Die DE 10 2012 218361 A1 beschreibt ein Verfahren zur Bestimmung des Kollisionsrisikos eines Kraftfahrzeugs mit einem Objekt, z. B. einem Baum, auf der Grundlage einer Risikobewertung durch einen Fahrsicherheitskoordinator. Eine Ausweichempfehlung an einen Fahrzeugführer oder eine Ausweichunterstützung für den Fahrzeugführer wird ausgegeben oder ein autonomer Eingriff zum Umschalten wird vom Fahrsicherheitskoordinator auf der Grundlage der Kritikalität der Fahrbedingungen und der Signalqualität der Umgebungsdaten durchgeführt.

Die DE 10 2020 209007 A1 beschreibt ein Verfahren zur zentralen Fehlerverwaltung wobei in einem Kraftfahrzeug ein Fehlersignal, das sich auf eine Komponente bezieht, von einer zugehörigen Komponentensteuereinheit an eine zentrale Steuereinheit übertragen wird. In Abhängigkeit von dem Fehlersignal werden eine erste und eine zweite Funktionssteuereinheit bestimmt.

Auch wenn das Ausgeben einer Warnung oder das Auslösen einer Fahrassistenzfunktion grundsätzlich sinnvoll und auch gewollt ist, beispielsweise, wenn dem Fahrzeug eine mögliche Kollision mit einem Objekt wie z.B. einem anderen Fahrzeug bevorsteht, gibt es Situationen, in denen der Fahrer beabsichtigt, die mögliche Kollision auch ohne Warnung zu verhindern. Dies ist für das Fahrassistenzsystem nicht erkennbar. Das Fahrassistenzsystem wird also eingreifen und eine falsch-positive Warnung oder einen unnötigen Eingriff in die Fahrzeugführung ausführen.

Der Erfindung liegt die Aufgabe zugrunde, ein optimiertes Verfahren zum Betreiben eines Fahrassistenzsystems eines Fahrzeugs vorzuschlagen, welches die falsch-positiven Warnungen und/oder unnötige Eingriffe in die Fahrzeugführung einschränkt und/oder vermeidet.

Diese Aufgabe wird durch die im Anspruch 1 angegebenen Verfahrensschritte gelöst. Weitere vorteilhafte Ausgestaltungen der Erfindung sind in den Unteransprüchen beschrieben.

Erfindungsgemäß ist ein Verfahren zum Betreiben eines Fahrassistenzsystems eines Fahrzeugs umfassend die folgenden Schritte vorgesehen:
a. Erfindungsgemäßes Feststellen durch ein erstes Fahrassistenzuntersystem, ob sich das Fahrzeug innerhalb eines vorbestimmten Umgebungsbereichs wenigstens eines Objekts befindet; und wenn festgestellt wird, dass sich das Fahrzeug innerhalb des vorbestimmten Umgebungsbereichs des wenigstens einen Objekts befindet:
   b. Erfindungsgemäßes Feststellen durch ein zweites Fahrassistenzuntersystem, ob eine erste Fahrassistenzfunktion für das Fahrzeug vorgesehen ist, welche den vorbestimmten Umgebungsbereich des wenigstens einen Objekts berücksichtigt, und wenn festgestellt wird, dass die erste Fahrassistenzfunktion den vorbestimmten Umgebungsbereich des wenigstens einen Objekts berücksichtigt:
   c. Erfindungsgemäßes Festlegen einer gegenüber einer vorbestimmten Auslöseschwelle des ersten Fahrassistenzuntersystems verringerten Auslöseschwelle
   d. Erfindungsgemäße Reduzierung einer Intensität oder Deaktivieren einer Ausgabe eines von dem ersten Fahrassistenzuntersystem ausgegebenen Warnsignals und/oder Deaktivieren einer zweiten Fahrassistenzfunktion des ersten Fahrassistenzuntersystems.

Unter einem Fahrassistenzuntersystem ist dabei insbesondere ein unabhängiges System innerhalb des gesamtes Fahrassistenzsystems des Fahrzeugs zu verstehen, wobei das erste und das zweite Fahrassistenzuntersystem beispielsweise durch eine Schnittstelle verbunden sind. Unter einer Berücksichtigung eines Objekts in Schritt b) ist zu verstehen, dass das zweite Fahrassistenzuntersystem z.B. bereits eine Berechnung auf Basis des vorbestimmten Umgebungsbereichs des Objekts durchgeführt hat und diese Situation eingeplant hat, um eine Gefahrsituation zu vermeiden, wobei unter einer Gefahrsituation verstanden wird, dass es sich um eine Situation handelt, in welcher für das Fahrzeug eine Gefahr besteht, in irgendeiner Weise eine Kollision zu erleiden.

Beispielsweise kann es sich bei dem wenigstens einen Objekt um ein Objekt in Bewegung und/oder um ein unbewegtes Objekt handeln, bevorzugterweise um ein fahrendes Fahrzeug, ein parkendes Fahrzeug, ein Fahrrad, einen Baum, eine Mülltonne und/oder ähnliches.

Dieses Verfahren hat den Vorteil, dass durch die Einbeziehung eines ersten Fahrassistenzuntersystems und eines zweiten Fahrassistenzuntersystems festgestellt wird, ob eine Gefahrsituation besteht, und dass, wenn diese Gefahrsituation besteht, festgestellt wird, ob das Fahrzeug ohne Einwirkung des Fahrers bereits eine Maßnahme zur Abwendung der Gefahrsituation getroffen hat. In dem Fall wird dann die durch den Fahrer als störend empfundene Warnung zumindest verringert oder deaktiviert. Auch kann ein durch den Fahrer als unangenehm empfundener Warnbremsruck oder eine Bremsung vorab deaktiviert werden. Ein weiterer Vorteil ist dabei auch die Erhöhung des Vertrauens des Fahrers und anderer Fahrzeugführer in der Umgebung in Assistenzsysteme.

Es kann sich bei dem ersten Fahrassistenzuntersystem z.B. um ein Front-Assist-System handeln, durch welches basierend auf der aktuellen Fahrsituation Szenarien generiert werden, um die beste Lösung im Umgang mit einer Gefahrsituation zu finden und zu entscheiden, welche erste Fahrassistenzfunktion durchgeführt wird. Beispielsweise umfasst die erste Fahrassistenzfunktion des ersten Fahrassistenzuntersystems eine Warnfunktion und/oder eine Längsregelungsfunktion und/oder eine Ausweichunterstützungsfunktion. Ein zweites Fahrassistenzuntersystem kann ein Travel-Assist-System sein, durch welches das Fahrzeug ohne Einwirken des Fahrers gesteuert wird und welches entscheidet, welche erste Fahrassistenzfunktion durchgeführt wird, um zu einem gewünschten Ziel zu gelangen.

Beispielsweise kann Schritt b) mit weiteren Fahrassistenzuntersystemen, beispielsweise einem dritten Fahrassistenzuntersystem als Schritt b.2) durchgeführt werden. Hierdurch wird das Vertrauen des Fahrers in das Assistenzsystem des Fahrzeugs noch weiter gesteigert.

Beispielsweise umfasst eine zweite Fahrassistenzfunktion des ersten Fahrassistenzuntersystems eine Warnfunktion und/oder eine Längsregelungsfunktion und/oder eine Ausweichunterstützungsfunktion. Insbesondere kann es sich bei der Warnfunktion um eine Abstandswarnfunktion handeln. Die Warnfunktion kann den Fahrer des Fahrzeugs auf eine in Zukunft auftretende Gefahrsituation aufmerksam machen. Reagiert der Fahrer hierauf nicht, kann eine Warnkaskade ausgelöst werden, wobei über die Längsregelungsfunktion ein Bremsruck ausgelöst wird, eine Notbremsung ausgeführt wird und/oder über die Ausweichunterstützungsfunktion ein Ausweichmanöver durchgeführt wird. Die zweite Fahrassistenzfunktion ermöglicht hierdurch eine erhöhte Sicherheit in Gefahrsituationen für den Fahrer des Fahrzeugs.

Beispielsweise umfasst die erste Fahrassistenzfunktion des zweiten Fahrassistenzuntersystems eine Längsregelungsfunktion und/oder eine Querführungsfunktion und/oder eine Bahnplanungsfunktion. Die Längsregelungsfunktion kann dabei insbesondere die Geschwindigkeit des Fahrzeugs anpassen. Die Querführungsfunktion kann dabei die Lenkung des Fahrzeugs beeinflussen und ist beispielsweise für Spurwechselmanöver zuständig. Die Bahnplanungsfunktion kann beispielsweise eine kurzfristige Bahnplanung, insbesondere für 1000 m, bevorzugterweise 500 m, besonders bevorzugterweise 250 m durchführen und/oder eine langfristige Bahnplanung, insbesondere bis zu einem gewünschten Zielort des Fahrzeugs, umfassen.

Beispielsweise basiert die erste Fahrassistenzfunktion, insbesondere die Bahnplanungsfunktion auf mindestens einer Messung durch mindestens einen Sensor von mindestens einem Fahrbahnparameter, mindestens einem Fahrzeugparameter und/oder mindestens einem Fahrerparameter. Die Bahnplanungsfunktion kann auch auf einer Kombination von Fahrbahnparameter, Fahrzeugparameter und/oder Fahrerparameter basieren.

Bevorzugterweise basiert die Bahnplanungsfunktion auf zusätzlichen Daten, insbesondere Navigationsdaten, welche von dem Fahrzeug über eine drahtlose Datenübertragungseinrichtung, insbesondere W-LAN und/oder LTE, empfangen werden. Unter Navigationsdaten versteht der Fachmann dabei Informationen über die aktuelle Verkehrslage, Straßensperrungen, Baustellen etc. Dabei können die Daten beispielsweise in einem Cloudspeicher oder einem lokalen Speicher im Fahrzeug gespeichert und wieder abgerufen werden.

Beispielsweise ist der mindestens eine Sensor ausgewählt aus einer Liste von Lidar-, Ultraschall-, Kamera-, Radarsensoren. Hiermit kann das zweite Fahrassistenzuntersystem gewährleisten, dass ein möglichst vollständiges Bild einer Umgebung des Fahrzeugs erzeugt werden kann, und die Genauigkeit der Erkennung des vorbestimmten Umgebungsbereichs von dem wenigsten einem Objekt wird erhöht. Beispielsweise kann der mindestens Sensor das erste Fahrassistenzuntersystem und das zweite Fahrassistenzuntersystem mit Daten versorgen.

Beispielsweise ist der mindestens eine Fahrbahnparameter ausgewählt aus einer Liste umfassend: Standort des Fahrzeugs, Spurtyp des Fahrzeugs, Position des Fahrzeugs auf der einer Fahrspur, Schwarmdaten, Wetter, Geschwindigkeit und Fahrtrichtung des Fahrzeugs. Der Fachmann versteht dabei unter Standort des Fahrzeugs insbesondere eine Position auf der Straße, beispielsweise einen Streckenkilometer und/oder ob z.B. in einer Vorausschau besondere Kurven auf der zukünftigen Strecke liegen; unter dem Spurtyp des Fahrzeugs, ob es sich beispielsweise um eine dreispurige Autobahn handelt oder eine einspurige Landstraße, beispielsweise kann dies aus Straßenkartendaten ermittelt werden oder auch aus Live-Daten, welche aus den gewählten Spuren anderer Fahrzeuge ermittelt werden; unter der Position auf der Fahrspur, ob sich das Fahrzeug auf beispielsweise einer mittleren oder einer linken/rechten Spur befindet, und/oder ob das Fahrzeug die Spur verlässt. Unter Schwarmdaten versteht der Fachmann Daten, die das Fahrzeug von anderen Fahrzeugen in der Umgebung empfängt, diese können beispielsweise Informationen über eine aktuelle Beschaffenheit einer vorausliegenden Strecke enthalten, insbesondere über ein Vorhandensein von aktuellen Hindernissen, wie z.B. eine verlorene Ladung oder eine Trajektorie von einem Fahrzeug im Gegenverkehr und/oder die gewählte Route von vorausfahrenden Fahrzeugen. Durch die Verwendung von diesen Fahrbahnparametern wird die Bahnplanungsfunktion verbessert, indem bereits bekannte Gefahrsituationen berücksichtigt werden.

Beispielsweise ist der mindestens eine Fahrzeugparameter ausgewählt aus einer Liste umfassend: Aktivitätsstatus des zweiten Fahrassistenzuntersystems, Fahrsicherheitslevel, Geschwindigkeit. Bevorzugterweise werden alle Fahrbahnparamater kontinuierlich erfasst und verarbeitet; ist jedoch das zweite Fahrassistenzuntersystem deaktiviert, kann im Schritt b) des Verfahrens keine erste Fahrassistenzfunktion durchgeführt werden. Der Fachmann versteht unter Fahrsicherheitslevel die ASIL-Level der ISO-Norm 26262. Beispielsweise wird die Geschwindigkeit dabei in dem Verfahren berücksichtigt, um einen Bremsweg zu berechnen und darüber die vorbestimmte Auslöseschwelle anzupassen.

Beispielsweise ist der mindestens eine Fahrerparameter ausgewählt aus einer Liste umfassend: Aufmerksamkeitsstatus des Fahrers, Notfallstatus des Fahrers. Unter Aufmerksamkeitsstatus ist beispielsweise zu verstehen, dass der Fahrer nicht auf die Straße schaut und/oder die Hände nicht am Steuer des Fahrzeugs hat oder anderweitig abgelenkt ist.

Beispielsweise wird der vorbestimmte Umgebungsbereich anhand einer Position des Objekts ermittelt. Dies hat den Vorteil, dass das Fahrassistenzsystem, das erste Fahrassistenzuntersystem und/oder das zweite Fahrassistenzuntersystem das Objekt erst berücksichtigt, wenn es relevant wird. Liegt das Objekt beispielsweise nicht auf einer Route des Fahrzeugs und/oder in einer Umgebung der Route, ist es nicht relevant und braucht nicht berücksichtigt zu werden.

Beispielsweise wird eine Grenze des vorbestimmten Umgebungsbereichs durch einen Abstand zum Objekt definiert. Als eine alternative oder zusätzliche Möglichkeit kann hier über den reinen Abstand zum Objekt festgestellt werden, ob das Fahrzeug in sich innerhalb des vorbestimmten Umgebungsbereichs befindet.

Das Festlegen der vorbestimmte Auslöseschwelle ist bevorzugt abhängig von Daten des ersten Fahrassistenzuntersystems, durch welche festgestellt wird, ob eine Gefahrsituation besteht. Bevorzugterweise erfolgt diese Feststellung durch das erste Fahrassistenzuntersystem basierend auf der Geschwindigkeit des Fahrzeugs, der Trajektorie des Fahrzeugs und des vorbestimmten Umgebungsbereichs des Objekts. Ist beispielsweise der Bremsweg bis zu einem Objekt bekannt, kann der Abstand zum Objekt die vorbestimmte Auslöseschwelle sein. Diese würde durch die Berücksichtigung des zweiten Fahrassistenzuntersystems dann verringert, weil das zweiten Fahrassistenzuntersystem beispielsweise eine Route geplant hat, welche an einem parkenden Auto vorbeiführt. In diesem Fall wäre eine Auslösung einer Warnfunktion eine falsch-positive Warnung, weil keine Gefahrsituation besteht.

Beispielsweise liegt die vorbestimmte Auslöseschwelle innerhalb oder außerhalb des vorbestimmten Umgebungsbereichs. Der vorbestimmte Umgebungsbereich kann so gewählt werden, dass die Auslöseschwelle noch nicht erreicht wird, wenn sich das Fahrzeug in dem vorbestimmten Umgebungsbereich befindet, sondern erst dann, wenn sich der Abstand zum Objekt weiter verringert. Hierdurch wird erreicht, dass ein ungewolltes Auslösen einer Fahrassistenzfunktion schon dann passiert, wenn das Fahrzeug in den Umgebungsbereich gelangt.

Alternativ besteht weiterhin die Möglichkeit, besonders früh zu warnen. Hierdurch wird sichergestellt, dass die Sicherheit des Fahrers gewährleistet bleibt.

Beispielsweise umfasst das Verfahren zusätzlich einen Schritt e):
e) Feststellen, ob das zweite Fahrassistenzuntersystem deaktiviert ist, insbesondere durch Einwirken eines Fahrers, wobei die vorbestimmte Auslöseschwelle zurückgesetzt wird wenn festgestellt wird, dass das zweite Fahrassistenzuntersystem deaktiviert ist. Befindet sich das Fahrzeug beispielsweise in einer aktiven Längsregelungsfunktion und Querführungsfunktion, so kann die vorbestimmte Auslöseschwelle verringert worden sein, wenn keine Gefahrsituation besteht. Greift der Fahrer des Fahrzeugs nun ein und deaktiviert die Längsregelungsfunktion und Querführungsfunktion, ist nicht mehr klar, ob eine Gefahrsituation besteht, denn die Reaktionen des Fahrers sind nicht vorausplanbar. Daher muss in diesem Fall die verringerte vorbestimmte Auslöseschwelle wieder auf das Ausgangsniveau zurückgesetzt werden.

Beispielsweise wird das Verfahren kontinuierlich während einer Fahrt des Fahrzeugs durchgeführt. Hierdurch wird gewährleistet, dass ein Eingreifen des Fahrers und/oder eine Veränderung des mindestens einen Objekts stets berücksichtigt wird und daher das Vertrauen in die Fahrassistenz weiter erhöht wird.

Die erfindungsgemäße Aufgabe wird ferner gelöst durch ein Fahrassistenzsystem, ausgebildet zur Verwendung in einem Verfahren mit den zuvor beschriebenen Merkmalen. Das Fahrassistenzsystem weist bevorzugt den mindestens einen Sensor und/oder die drahtlose Datenübertragungseinrichtung auf. Ferner weist das Fahrassistenzsystem eine Steuereinrichtung auf, mittels welcher die vorgenannten Verfahrensschritte ausführbar sind. Die Steuereinrichtung ist dazu insbesondere mit dem Sensor und/oder der drahtlosen Datenübertragungseinrichtung ausgestattet, um Sensorsignale und/oder Daten von diesen zu empfangen bzw. um Steuersignale an den Sensor und/oder die Datenübertragungseinrichtung zu übertragen. Ferner ist die Steuereinrichtung mit der Anzeigevorrichtung des Fahrzeugs verbunden. Beispielsweise kann die Datenübertragungseinrichtung die Daten in einen Cloudspeicher übermitteln.

Darüber hinaus wird die erfindungsgemäße Aufgabe gelöst durch ein Fahrzeug aufweisend das vorgenannte Fahrassistenzsystem.

Nachfolgend werden Ausführungsbeispiele der Erfindung anhand der Zeichnungen näher erläutert. Es zeigen:
- Fig. 1: ein Szenario mit einem bewegten Objekt und einem unbewegten Objekt,
- Fig. 2: ein Szenario mit einem unbewegten Objekt in einer Kurve, und
- Fig. 3: ein Ablaufdiagramm eines Verfahrens zum Betreiben eines Fahrassistenzsystems eines Fahrzeugs.

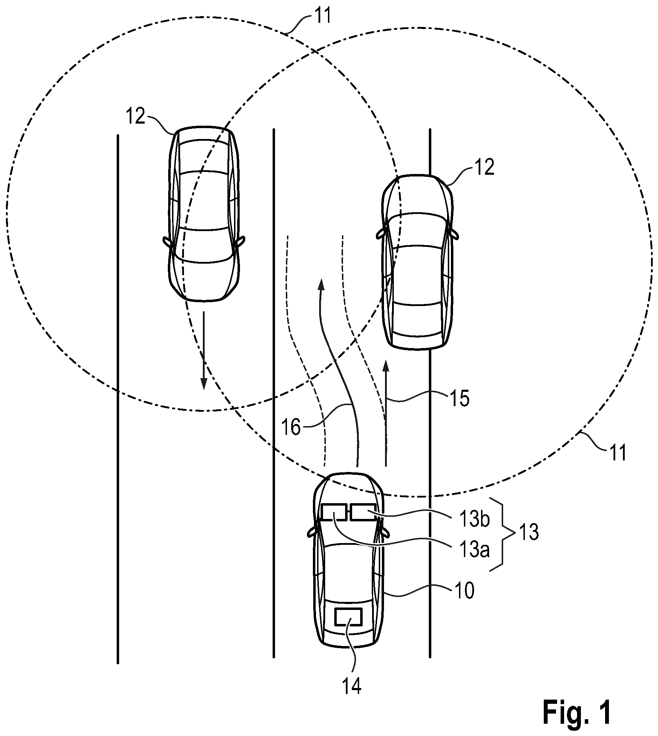

In den Figuren weisen dieselben konstruktiven Elemente jeweils dieselben Bezugszeichen auf. Figur 1 zeigt ein Szenario, in dem sich ein Fahrzeug 10 in einem vorbestimmten Umgebungsbereich 11 eines Objekts 12, eines geparkten Fahrzeugs, befindet. Dies wird durch ein erstes Fahrassistenzuntersystem 13a, welches als Front-Assist-System ausgebildet ist, des Fahrassistenzsystems 13 des Fahrzeugs 10 festgestellt. Die Feststellung erfolgt aufgrund von bereitgestellten Daten eines Sensors 14, insbesondere der Fahrrichtung und der Geschwindigkeit des Fahrzeugs 10. Das Fahrzeug 10 bewegt sich auf der Fahrlinie 15 direkt auf das Objekt 12 zu. Es besteht somit eine Gefahrsituation. Ohne weiteres Einwirken des Fahrers oder des Fahrassistenzsystems 13 würde es zu einer Kollision mit dem Objekt 12 kommen. Eine vorbestimmte Auslöseschwelle des ersten Fahrassistenzuntersystems 13a wird dabei unterschritten, da eine Gefahrsituation besteht. Ein zweites Fahrassistenzuntersystem 13b ausgebildet als Travel-Assist-System stellt fest, dass der vorbestimmte Umgebungsbereich 11 des Objekts 12 bereits berücksichtigt ist, und eine erste Fahrassistenzfunktion, insbesondere eine Bahnplanungsfunktion und eine Querführungsfunktion, gezeigt durch einen geplanten Fahrschlauch 16, vorgesehen ist. Das Fahrzeug kann im Fahrschlauch 16 auch durch eine Längsregelungsfunktion abgebremst oder beschleunigt werden. Der Fahrschlauch 16 führt am Objekt 12 vorbei, und es besteht keine Gefahrsituation in Bezug auf das Objekt 12, insofern dem Fahrschlauch 16 gefolgt wird. Auf der Gegenfahrbahn zum Fahrzeug 10 befindet sich ein zweites Objekt 12, ein Fahrzeug in Bewegung, welches ebenfalls einen vorbestimmten Umgebungsbereich 11 aufweist. Auch hier stellt das zweite Fahrassistenzuntersystem fest, ob der vorbestimmte Umgebungsbereich des zweiten Objekts 12 berücksichtigt wird. Hier ist der Fahrschlauch 16 so gewählt, dass ebenfalls keine Gefahrsituation bezüglich des zweiten Objekts 12 vorliegt. Demzufolge wird die vorbestimmte Auslöseschwelle verringert, da insgesamt keine Gefahrsituation besteht, und eine verringerte Auslöseschwelle wird festgelegt. Das erste Fahrassistenzuntersystem 13a deaktiviert die Ausgabe eines Warnsignals, welches durch den Fahrer als störend empfunden werden würde, denn der Fahrer geht davon aus, dass das Fahrzeug 10 das Objekt 12 umfährt. Ebenfalls wird eine Ausweichmanöverfunktion einer zweiten Fahrassistenzfunktion deaktiviert, so dass kein falsch-positives Ausweichmanöver ausgelöst wird, wodurch das Fahrzeug 10 gegebenenfalls in den vorbestimmten Umgebungsbereich eines weiteren Objekts 12 gerät. Würde der Fahrer in dieses Szenario eingreifen, indem dieser die erste Fahrassistenzfunktion des zweiten Fahrassistenzuntersystems unterbricht oder anderweitig deaktiviert, wird die vorbestimmte Auslöseschwelle wieder auf ein Ausgangsniveau zurückgesetzt, und das erste Fahrassistenzuntersystem stellt erneut fest, ob eine Gefahrsituation vorliegt und würde dann bei Vorliegen einer Gefahrsituation ein Warnsignal auslösen und/oder ein Brems- und/oder Ausweichmanöver durchführen.

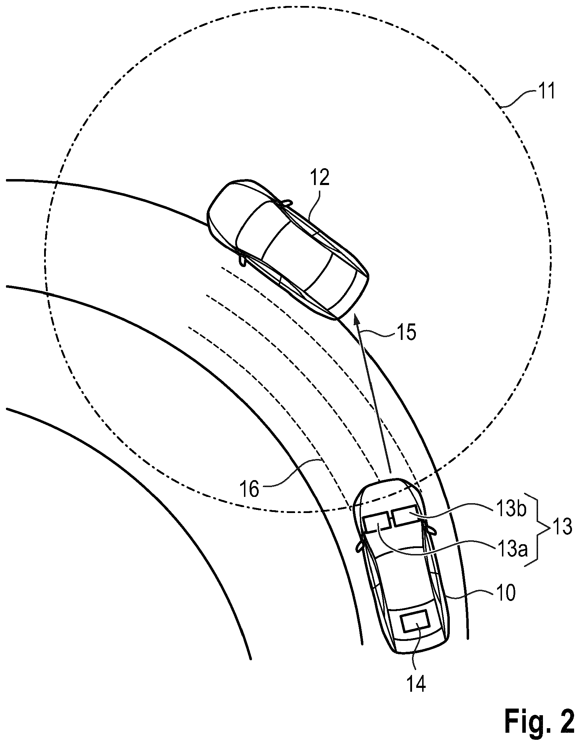

Figur 2 zeigt ein Szenario, in dem sich ein Fahrzeug 10 in einer Kurvensituation, in einem vorbestimmten Umgebungsbereich 11 eines Objekts 12, welches ein am Straßenrand geparktes Fahrzeug ist, befindet. Das erste Fahrassistenzuntersystem 13a des Fahrassistenzsystems 13 des Fahrzeugs 10 stellt fest, dass sich das Fahrzeug 10 in einer Gefahrsituation befindet, denn ohne Eingreifen der zweiten Fahrassistenzfunktion würde es zu einer Kollision mit dem parkenden Fahrzeug kommen. Dass eine Gefahrsituation besteht, wenn sich das Fahrzeug 10 weiter auf einer Fahrlinie 15 fortbewegt, wird aufgrund der Daten eines Sensors 14 festgestellt. Das zweite Fahrassistenzuntersystem 13b mit einer aktiven ersten Fahrassistenzfunktion, insbesondere einer aktiven Bahnplanungsfunktion mit aktiver Querführungsfunktion und Längsregelungsfunktion, hat jedoch die Kurvenlage und das auf einer Fahrspur geparkte Objekt 12 berücksichtigt und einen entsprechenden Fahrschlauch 16 geplant. Solange der Fahrer nicht eingreift und die erste Fahrassistenzfunktion 13a aktiv bleibt, wird die vorbestimmte Auslöseschwelle herabgesetzt, und es kommt durch Deaktivierung nicht zum Auslösen eines Warnsignals oder einer anderen Funktion einer Warnkaskade.

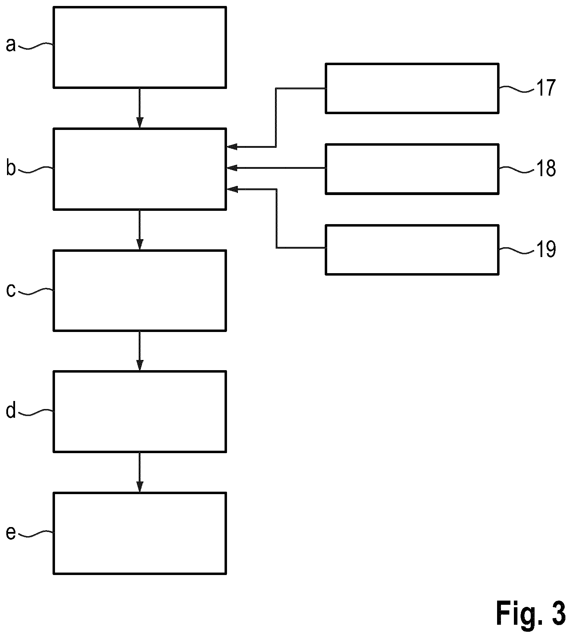

Figur 3 zeigt einen schematischen Verfahrensablauf des Verfahrens zum Betreiben des Fahrassistenzsystems 13 eines Fahrzeugs 10.

In einem Verfahrensschritt a. wird durch ein als Front-Assist-System ausgebildetes erstes Fahrassistenzuntersystem 13a festgestellt, ob sich das Fahrzeug 10 in einem vorbestimmten Umgebungsbereich 11 eines Objekts 12 befindet. Dieser kann beispielsweise ein Abstand zu dem Objekt 12 sein. Diese Feststellung wird durch Daten von einem Sensor 14 unterstützt. Wenn sich das Fahrzeug in einem vorbestimmten Umgebungsbereich 11 von mindestens einem Objekt befindet, wird in einem Schritt b. durch ein als Travel-Assist-System ausgebildetes zweites Fahrassistenzsystem festgestellt, ob das zweite Fahrassistenzsystem eine erste Fahrassistenzfunktion vorgesehen hat, welche den vorbestimmten Umgebungsbereich 11 berücksichtigt. Die erste Fahrassistenzfunktion ist dabei eine Querführungsfunktion, welche das Lenken des Fahrzeugs 10 ermöglicht, eine Längsregelungsfunktion, welche das Beschleunigen und Bremsen des Fahrzeugs 10 ermöglicht, und eine Bahnplanungsfunktion. Die Bahnplanungsfunktion greift dabei auf Fahrbahnparameter 17, Fahrzeugparameter 18 und Fahrerparameter 19 zurück, um die Bahnplanung durchzuführen. Die Daten für die Parameter werden durch den Sensor 14 gemessen und/oder durch eine drahtlose Datenübertragungseinrichtung 20 an das zweite Fahrassistenzuntersystem 13b weitergegeben. Auf diese Weise kann ein Fahrschlauch 16 geplant werden, welcher an dem Objekt 12 vorbeiführt, ohne dass eine Gefahrsituation besteht. In diesem Fall wird in einem Schritt c. die vorbestimmte Auslöseschwelle des ersten Fahrassistenzuntersystems 13a verringert. Die vorbestimmte Auslöseschwelle berücksichtigt also nur die Daten des ersten Fahrassistenzuntersystems, während die verringerte Auslöseschwelle ebenfalls die Daten des zweiten Fahrassistenzuntersystems berücksichtigt, was durch eine Schnittstelle zwischen diesen ermöglicht ist. In einem Schritt d. wird dann die Ausgabe eines Warnsignals unterdrückt und eine zweite Fahrassistenzfunktion, wie z.B. eine Notbremsung, unterdrückt, da die Gefahrsituation aufgrund der Routenplanung des zweiten Fahrassistenzuntersystems nicht weiter besteht. Sollte der Fahrer durch aktives Eingreifen oder irgendein anderer Umstand dazu führen, dass die Bahnplanungsfunktion des Fahrzeugs nicht umgesetzt wird oder abgebrochen wird, wird die vorbestimmte Auslöseschwelle des ersten Fahrassistenzuntersystems in einem Schritt e. wieder zurückgesetzt. Hierdurch wird gewährleistet, dass die Warnfunktion, Bremsfunktion und/oder Ausweichmanöverfunktion wieder warnt oder eingreift, sobald eine Gefahrsituation besteht.

### Bezugszeichenliste

- 10: Fahrzeug
- 11: vorbestimmter Umgebungsbereich
- 12: Objekt
- 13: Fahrassistenzsystem
- 13a: erstes Fahrassistenzuntersystem
- 13b: zweites Fahrassistenzuntersystem
- 14: Sensor
- 15: Fahrlinie
- 16: Fahrschlauch
- 17: Fahrbahnparameter
- 18: Fahrzeugparameter
- 19: Fahrerparameter
- 20: drahtlose Datenübertragungseinrichtung

- a. bis e.: Verfahrensschritte

## Patentansprüche

1. Verfahren zum Betreiben eines Fahrassistenzsystems (13) eines Fahrzeugs (10) umfassend die folgenden Schritte:
a. Feststellen durch ein erstes Fahrassistenzuntersystem (13a), ob sich das Fahrzeug (10) innerhalb eines vorbestimmten Umgebungsbereichs (11) wenigstens eines Objekts (12) befindet; und wenn festgestellt wird, dass sich das Fahrzeug (10) innerhalb des vorbestimmten Umgebungsbereichs (11) des wenigstens einen Objekts (12) befindet:
b. Feststellen durch ein zweites Fahrassistenzuntersystem (13b), ob eine erste Fahrassistenzfunktion für das Fahrzeug (10) vorgesehen ist, welche den vorbestimmten Umgebungsbereich (11) des wenigstens einen Objekts (12) berücksichtigt, und wenn festgestellt wird, dass die erste Fahrassistenzfunktion den vorbestimmten Umgebungsbereich (11) des wenigstens einen Objekts (12) berücksichtigt:
c. Festlegen einer gegenüber einer vorbestimmten Auslöseschwelle des ersten Fahrassistenzuntersystems (13a) verringerten Auslöseschwelle
d. Reduzieren einer Intensität oder Deaktivieren einer Ausgabe eines von dem ersten Fahrassistenzuntersystem (13a) ausgegebenen Warnsignals und/oder Deaktivieren einer zweiten Fahrassistenzfunktion des ersten Fahrassistenzuntersystems (13a).

2. Verfahren nach Anspruch 1, **dadurch gekennzeichnet, dass** eine zweite Fahrassistenzfunktion des ersten Fahrassistenzuntersystems (13a) eine Warnfunktion und/oder eine Längsregelungsfunktion und/oder eine Ausweichunterstützungsfunktion umfasst.

3. Verfahren nach einem der vorherigen Ansprüche, **dadurch gekennzeichnet, dass** die erste Fahrassistenzfunktion des zweiten Fahrassistenzuntersystems (13b) eine Längsregelungsfunktion und/oder eine Querführungsfunktion und/oder eine Bahnplanungsfunktion umfasst.

4. Verfahren nach einem der vorherigen Ansprüche, **dadurch gekennzeichnet, dass** das Verfahren zusätzlich einen Schritt e) umfasst
e) Feststellen, ob das zweite Fahrassistenzuntersystem (13b) deaktiviert ist, insbesondere durch Einwirken eines Fahrers, wobei die vorbestimmte Auslöseschwelle zurückgesetzt wird wenn festgestellt wird, dass das zweite Fahrassistenzuntersystem (13b) deaktiviert ist.

5. Verfahren nach einem der vorherigen Ansprüche, **dadurch gekennzeichnet, dass** der vorbestimmte Umgebungsbereich (11) anhand einer Position des Objekts (12) ermittelt wird.

6. Verfahren nach einem der vorherigen Ansprüche, **dadurch gekennzeichnet, dass** eine Grenze des vorbestimmten Umgebungsbereichs (11) durch einen Abstand zum Objekt (12) definiert wird.

7. Verfahren nach einem der vorherigen Ansprüche, **dadurch gekennzeichnet, dass** die vorbestimmte Auslöseschwelle innerhalb oder außerhalb des vorbestimmten Umgebungsbereichs (11) liegt.

8. Verfahren nach einem der vorherigen Ansprüche, **dadurch gekennzeichnet, dass** das ausgegebene Warnsignal ein akustisches und/oder visuelles Warnsignal ist.

9. Verfahren nach einem der Ansprüche 3 bis 8, **dadurch gekennzeichnet, dass** die Bahnplanungsfunktion basiert auf mindestens einer Messung durch mindestens einen Sensor von mindestens einem Fahrbahnparameter (17), mindestens einem Fahrzeugparameter (18) und/oder mindestens einem Fahrerparameter (19).

10. Verfahren nach Anspruch 9, **dadurch gekennzeichnet, dass** der mindestens eine Sensor ausgewählt ist aus einer Liste von Lidar-, Ultraschall-, Kamera-, Radarsensoren.

11. Verfahren nach einem der Ansprüche 9 oder 10, **dadurch gekennzeichnet, dass** der mindestens eine Fahrbahnparameter (17) ausgewählt ist aus einer Liste umfassend: Standort des Fahrzeugs, Spurtyp des Fahrzeugs, Position des Fahrzeugs auf einer Fahrspur, Schwarmdaten, Wetter, Geschwindigkeit und Fahrtrichtung des Fahrzeugs.

12. Verfahren nach einem der Ansprüche 9 bis 11, **dadurch gekennzeichnet, dass** der mindestens eine Fahrzeugparameter (18) ausgewählt ist aus einer Liste umfassend: Aktivitätsstatus des zweiten Fahrassistenzuntersystems, Fahrsicherheitslevel, Geschwindigkeit.

13. Verfahren nach einem der Ansprüche 9 bis 12, **dadurch gekennzeichnet, dass** der mindestens eine Fahrerparameter (19) ausgewählt ist aus einer Liste umfassend: Aufmerksamkeitsstatus des Fahrers, Notfallstatus des Fahrers.

14. Fahrassistenzsystem, ausgebildet zur Durchführung des Verfahrens gemäß einem der vorherigen Ansprüche.

15. Fahrzeug, aufweisend ein Fahrassistenzsystem gemäß Anspruch 14.

## Claims

1. Method for operating a driver assistance system (13) of a vehicle (10), comprising the following steps:
a. determining by means of a first driver assistance subsystem (13a) whether the vehicle (10) is within a predetermined environmental region (11) of at least one object (12); and if it is determined that the vehicle (10) is within the predetermined environmental region (11) of the at least one object (12):
b. determining by means of a second driver assistance subsystem (13b) whether a first driver assistance function is provided for the vehicle (10) which function takes into account the predetermined environmental region (11) of the at least one object (12), and if it is determined that the first driver assistance function takes into account the predetermined environmental region (11) of the at least one object (12):
c. setting a reduced trigger threshold with respect to a predetermined trigger threshold of the first driver assistance subsystem (13a)
d. reducing an intensity or disabling an output of a warning signal issued by the first driver assistance subsystem (13a) and/or deactivating a second driver assistance function of the first driver assistance subsystem (13a).

2. Method according to claim 1, **characterized in that** a second driver assistance function of the first driver assistance subsystem (13a) comprises a warning function and/or a longitudinal control function and/or an evasive steering support function.

3. Method according to either of the preceding claims, **characterized in that** the first driver assistance function of the second driver assistance subsystem (13b) comprises a longitudinal control function and/or a lateral guidance function and/or a route planning function.

4. Method according to any of the preceding claims, **characterized in that** the method additionally comprises a step e)
e) determining whether the second driver assistance subsystem (13b) is deactivated, in particular by the action of a driver, the predetermined trigger threshold being reset if it is determined that the second driver assistance subsystem (13b) is deactivated.

5. Method according to any of the preceding claims, **characterized in that** the predetermined environmental region (11) is ascertained on the basis of a position of the object (12).

6. Method according to any of the preceding claims, **characterized in that** a boundary of the predetermined environmental region (11) is defined by a distance from the object (12).

7. Method according to any of the preceding claims, **characterized in that** the predetermined trigger threshold lies within or outside the predetermined environmental region (11).

8. Method according to any of the preceding claims, **characterized in that** the warning signal issued is an acoustic and/or visual warning signal.

9. Method according to any of claims 3 to 8, **characterized in that** the route planning function is based on at least one measurement by at least one sensor of at least one road parameter (17), at least one vehicle parameter (18) and/or at least one driver parameter (19).

10. Method according to claim 9, **characterized in that** the at least one sensor is selected from a list of lidar, ultrasonic, camera, and radar sensors.

11. Method according to either of claims 9 or 10, **characterized in that** the at least one road parameter (17) is selected from a list comprising: location of the vehicle, track type of the vehicle, position of the vehicle on a lane, swarm data, weather, speed and direction of driving of the vehicle.

12. Method according to any of claims 9 to 11, **characterized in that** the at least one vehicle parameter (18) is selected from a list comprising: activity status of the second driver assistance subsystem, driving safety level, speed.

13. Method according to any of claims 9 to 12, **characterized in that** the at least one driver parameter (19) is selected from a list comprising: attention status of the driver, emergency status of the driver.

14. Driver assistance system, designed to perform the method according to any of the preceding claims.

15. Vehicle comprising a driver assistance system according to claim 14.

## Revendications

1. Procédé permettant de faire fonctionner un système d'aide à la conduite (13) d'un véhicule (10), comprenant les étapes suivantes :
a. détermination, à l'aide d'un premier sous-système d'aide à la conduite (13a), du fait de savoir si le véhicule (10) se trouve à l'intérieur d'une zone environnante prédéfinie (11) d'au moins un objet (12) ; et s'il est déterminé que le véhicule (10) se trouve à l'intérieur de la zone environnante prédéfinie (11) de l'au moins un objet (12) :
b. détermination, à l'aide d'un second sous-système d'aide à la conduite (13b), du fait de savoir si une première fonction d'aide à la conduite est prévue pour le véhicule (10), laquelle prend en compte la zone environnante prédéfinie (11) de l'au moins un objet (12), et s'il est déterminé que la première fonction d'aide à la conduite prend en compte la zone environnante prédéfinie (11) de l'au moins un objet (12) :
c. définition d'un seuil de déclenchement inférieur à un seuil de déclenchement prédéfini du premier sous-système d'aide à la conduite (13a)
d. réduction d'une intensité ou désactivation d'une émission d'un signal d'avertissement émis par le premier sous-système d'aide à la conduite (13a) et/ou désactivation d'une seconde fonction d'aide à la conduite du premier sous-système d'aide à la conduite (13a).

2. Procédé selon la revendication 1, **caractérisé en ce qu'**une seconde fonction d'aide à la conduite du premier sous-système d'aide à la conduite (13a) comprend une fonction d'avertissement et/ou une fonction de régulation longitudinale et/ou une fonction d'aide à l'évitement.

3. Procédé selon l'une des revendications précédentes,
**caractérisé en ce que** la première fonction d'aide à la conduite du second sous-système d'aide à la conduite (13b) comprend une fonction de régulation longitudinale et/ou une fonction de guidage transversal et/ou une fonction de planification de trajectoire.

4. Procédé selon l'une des revendications précédentes,
**caractérisé en ce que** le procédé comprend en outre une étape e)
e) détermination du fait de savoir si le second sous-système d'aide à la conduite (13b) est désactivé, en particulier par l'intervention d'un conducteur, dans lequel le seuil de déclenchement prédéfini est réinitialisé s'il est déterminé que le second sous-système d'aide à la conduite (13b) est désactivé.

5. Procédé selon l'une des revendications précédentes,
**caractérisé en ce que** la zone environnante prédéfinie (11) est spécifiée à partir d'une position de l'objet (12).

6. Procédé selon l'une des revendications précédentes,
**caractérisé en ce qu'**une limite de la zone environnante prédéfinie (11) est définie par une distance par rapport à l'objet (12).

7. Procédé selon l'une des revendications précédentes,
**caractérisé en ce que** le seuil de déclenchement prédéfini se situe à l'intérieur ou à l'extérieur de la zone environnante prédéfinie (11).

8. Procédé selon l'une des revendications précédentes,
**caractérisé en ce que** le signal d'avertissement émis est un signal d'avertissement sonore et/ou visuel.

9. Procédé selon l'une des revendications 3 à 8, **caractérisé en ce que** la fonction de planification de trajectoire repose sur au moins une mesure par au moins un capteur d'au moins un paramètre de chaussée (17), d'au moins un paramètre de véhicule (18) et/ou d'au moins un paramètre de conducteur (19).

10. Procédé selon la revendication 9, **caractérisé en ce que** l'au moins un capteur est choisi parmi une liste de capteurs lidar, à ultrasons, à caméra et radar.

11. Procédé selon l'une des revendications 9 ou 10, **caractérisé en ce que** l'au moins un paramètre de chaussée (17) est choisi parmi une liste comprenant : emplacement du véhicule, type de voie empruntée par le véhicule, position du véhicule sur une voie, données en essaim, conditions météorologiques, vitesse et sens de circulation du véhicule.

12. Procédé selon l'une des revendications 9 à 11, **caractérisé en ce que** l'au moins un paramètre de véhicule (18) est choisi parmi une liste comprenant : état d'activité du second sous-système d'aide à la conduite, niveau de sécurité de la conduite, vitesse.

13. Procédé selon l'une des revendications 9 à 12, **caractérisé en ce que** l'au moins un paramètre de conduite (19) est choisi parmi une liste comprenant : état de vigilance du conducteur, état d'urgence du conducteur.

14. Système d'aide à la conduite, configuré pour mettre en œuvre le procédé selon l'une des revendications précédentes.

15. Véhicule présentant un système d'aide à la conduite selon la revendication 14.
